# EUROPÄISCHE PATENTSCHRIFT

(11) **EP 3 649 338 B1**
(45) Veröffentlichungstag und Bekanntmachung des Hinweises auf die Patenterteilung: **06.09.2023**
(21) Anmeldenummer: 18724539.4
(22) Anmeldetag: 14.05.2018
(51) Int. Cl.: F02M 55/02, F16L 25/14

(54) **ANSCHLUSSSTUTZEN FÜR EINE KRAFTSTOFFHOCHDRUCKPUMPE UND KRAFTSTOFFHOCHDRUCKPUMPE**
CONNECTION PIECE FOR A HIGH-PRESSURE FUEL PUMP, AND HIGH-PRESSURE FUEL PUMP
RACCORD TUBULAIRE POUR UNE POMPE À CARBURANT HAUTE PRESSION ET POMPE À CARBURANT HAUTE PRESSION

(30) Priorität: 05.07.2017 DE 102017211434
(43) Veröffentlichungstag der Anmeldung: 13.05.2020
(73) Patentinhaber: Robert Bosch GmbH, 70442 Stuttgart (DE)
(72) Erfinder: LIENERT, Edmund-Arnold, 71696 Moeglingen (DE); MARTIN, Florian, 71254 Ditzingen (DE)
(86) Internationale Anmeldenummer: PCT/EP2018/062376
(87) Internationale Veröffentlichungsnummer: WO 2019/007571

(56) Entgegenhaltungen:
- WO-A1-2013/182213
- DE-A1- 2 705 489
- DE-A1- 3 844 371
- DE-A1- 10 361 573
- DE-C- 563 917
- GB-A- 2 058 948
- US-A1- 2002 053 341
- US-B1- 6 352 067

## Beschreibung

### Stand der Technik

Die Erfindung betrifft ein Kraftstoffsystem einer Brennkraftmaschine mit einer Kraftstoffhochdruckpumpe mit einem Anschlussstutzen.

Kraftstoffhochdruckpumpen werden in Kraftstoffsystemen eingesetzt, um Kraftstoff von einem in einem Niederdruckbereich herrschenden Vordruck auf einen Einspritzdruck, der für eine Kraftstoffeinspritzung erforderlich ist, zu verdichten. Derartige Kraftstoffhochdruckpumpen weisen üblicherweise mindestens einen Kolben auf, der üblicherweise durch eine Nocke oder eine Exzenterscheibe axial bewegt werden kann. Durch die axiale Bewegung des Kolbens wird in einem Saughub Kraftstoff aus dem Niederdruckbereich über ein Mengensteuerventil in einen Förderraum angesaugt. In einem Förderhub wird der Kraftstoff im Kolbenraum verdichtet und über ein Auslassventil einem Auslass der Kraftstoffhochdruckpumpe zugeführt. An dem Auslass der Kraftstoffhochdruckpumpe ist üblicherweise ein Anschlussstutzen angeordnet. Über den Anschlussstutzen ist der Auslass der Kraftstoffhochdruckpumpe mit einem üblicherweise ein Rail umfassenden Hochdruckbereich verbunden.

Die US 6,352,067 B1 offenbart ein returnless fuel system pressure valve. Die US 2002/0053341 A1 offenbart eine Fuel Delivery Rail Assembly. Die DE 3844371 A1 offenbart eine Einspritzdüse. Die GB2058948A offenbart ein Returnless Fuel System Pressure Valve. Die DE2705489 A1 offenbart eine Pumpe. Aus der deutschen Patentschrift Nr. 563 917 ist ein Kraftstoffsystem bekannt.

Die DE 103 61 573 A1 der Anmelderin offenbart ein Kraftstoffsystem einer Brennkraftmaschine mit einer Kraftstoffhochdruckpumpe mit einem als Winkelstutzen ausgebildeten Anschlussstutzen.

### Offenbarung der Erfindung

Aufgabe der vorliegenden Erfindung ist es, ein Kraftstoffsystem einer Brennkraftmaschine mit einer Kraftstoffhochdruckpumpe mit einem Anschlussstutzen bereit zu stellen, der eine flexible Verwendung der Kraftstoffpumpe ermöglicht.

Diese Aufgabe wird durch ein Kraftstoffsystem einer Brennkraftmaschine mit einer Kraftstoffhochdruckpumpe mit einem Anschlussstutzen nach Anspruch 1 gelöst.

Der Anschlussstutzen in dem erfindungsgemäßen Kraftstoffsystem umfasst eine erste Anschlussöffnung, die zur Verbindung mit dem Auslass der Kraftstoffhochdruckpumpe vorgesehen ist und eine erste Öffnungsachse aufweist, und eine zweite Anschlussöffnung, die zur Verbindung mit dem Hochdruckbereich vorgesehen ist und eine zweite Öffnungsachse aufweist, wobei die zweite Öffnungsachse ungleichachsig mit der ersten Öffnungsachse angeordnet ist.

Durch die ungleichachsige Anordnung der Öffnungsachsen wird eine flexible räumliche Anordnung der Kraftstoffhochdruckpumpe gegenüber dem Hochdruckbereich, insbesondere dem Rail, ermöglicht. Es kann beispielsweise ein Versatz oder eine Querstellung zwischen der Ausrichtung des Hochdruckbereichs bzw. dessen Anschlusses und der Ausrichtung der Kraftstoffhochdruckpumpe durch den erfindungsgemäßen Anschlussstutzen überbrückt werden. Auch können beispielsweise der Anschluss des Hochdruckbereichs und der Auslass der Kraftstoffhochdruckpumpe mit gleicher Ausrichtung bzw. Öffnungsrichtung übereinander oder nebeneinander angeordnet sein, wobei beide problemlos mittels des erfindungsgemäßen Anschlussstutzens verbunden werden können. Die erste Öffnungsachse und die zweite Öffnungsachse können aber beispielsweise auch windschief zueinander verlaufen.

Unter der Öffnungsachse der jeweiligen Anschlussöffnungen ist dabei eine Gerade zu verstehen, die durch den Flächenmittelpunkt der jeweiligen Öffnungsfläche verläuft und orthogonal zur Öffnungsfläche angeordnet ist.

Unter einem Anschlussstutzen ist dabei ein Bauteil zu verstehen das unmittelbar mit der Kraftstoffhochdruckpumpe bzw. einem Gehäuse der Kraftstoffhochdruckpumpe verbunden ist. Der Anschlussstutzen schließt sich also direkt an die Kraftstoffhochdruckpumpe an und bildet den Übergang zum Hochdruckbereich. Bevorzugterweise weist der Anschlussstutzen, beispielsweise als Schraubengewinde ausgeführte, Verbindungseinrichtungen auf, um mit dem Gehäuse der Kraftstoffhochdruckpumpe und/oder mit dem Hochdruckbereich bzw. einer Hochdruckleitung oder direkt dem Rail verbunden zu werden.

Bevorzugt ist, wenn die erste Öffnungsachse und die zweite Öffnungsachse in einer Ebene liegen. Hierdurch werden gewisse Querkräfte auf die Verbindungen des Anschlussstutzens mit der Hochdruckpumpe bzw. mit dem Hochdruckbereich (bspw. dem Rail) vermieden. Derartige Querkräfte können bei längerer Betriebsdauer zu einer Leckage am Anschlussstutzen führen oder etwaige Gewinde des Anschlussstutzens derart belasten, dass sich die Gewinde verformen und ihre Funktionstüchtigkeit einbüßen.

Erfindungsgemäß ist die zweite Öffnungsachse parallel zu der ersten Öffnungsachse angeordnet. Hierdurch sind Schrägstellungen und damit verbundenen Belastungen auf die Verbindung des Anschlussstutzens mit der Kraftstoffpumpe bzw. dem Hochdruckbereich ausgeschlossen.

Vorteilhaft ist auch, wenn die erste Anschlussöffnung und die zweite Anschlussöffnung jeweils auf gegenüberliegenden Seiten des Anschlussstutzen liegen. Ein derartiger Anschlussstutzen ist in der vorgesehenen Montageposition räumlich zwischen Hochdruckpumpe und Hochdruckbereich angeordnet, was sich positiv auf die Lebensdauer der Verbindung auswirkt.

Bevorzugt ist, wenn die zweite Anschlussöffnung einen sich entlang der zweiten Öffnungsachse aufweitenden Querschnitt aufweist. Durch die ungleichachsige Anordnung der Öffnungsachsen kann es zu unerwünschten strömungsmechanischen Effekten kommen, die durch den sich aufweitenden Querschnitt der zweiten Anschlussöffnung verringert bzw. ausgeglichen werden können.

Von Vorteil ist, wenn die erste Anschlussöffnung mit einer ersten Öffnungsfläche in die Außenseite des Anschlussstutzens mündet und die zweite Anschlussöffnung mit einer zweiten Öffnungsfläche in die Außenseite des Anschlussstutzens mündet, wobei die erste Öffnungsfläche größer ist als die zweite Öffnungsfläche. Hierdurch lässt sich der Anschlussstutzen trotz ungleichachsiger Anordnung der Öffnungsachsen in einfacher und damit kostengünstiger Weise herstellen.

In einer bevorzugten Ausführungsform sind die erste Anschlussöffnung und die zweite Anschlussöffnung in einem einstückig ausgebildeten Grundkörper des Anschlussstutzens angeordnet, vorzugsweise wobei der Anschlussstutzen einstückig ausgebildet ist. Ein derartiger Anschlussstutzen lässt sich kostengünstig herstellen und eine fluiddichte Verbindung zwischen erster Anschlussöffnung und zweiter Anschlussöffnung ist stets problemlos gegeben.

Alternativ zu der zuletzt genannten Ausführungsform ist bevorzugt, wenn die erste Anschlussöffnung in einem ersten Stutzenelement angeordnet ist und die zweite Anschlussöffnung in einem getrennt gefertigten zweiten Stutzenelement, vorzugsweise das rotationssymmetrisch ausgebildet ist, angeordnet ist, und das erste Stutzenelement mit dem zweiten Stutzenelement, vorzugsweise unmittelbar, insbesondere über eine Schraubverbindung oder eine stoffschlüssige Verbindung, insbesondere eine Schweißnaht, verbunden ist. Eine derartige Ausführungsform ermöglicht es, selbst komplizierte relative Stellungen der Öffnungsachsen mit geringem Fertigungsaufwand zu realisieren. Das erste Stutzenelement und/oder das zweite Stutzenelement können in einfacher Bauweise getrennt voneinander hergestellt werden. Beispielsweise können die Anschlussöffnungen als einfache Bohrungen ausgeführt werden und durch eine entsprechende Verbindung der beiden Stutzenelemente kann dennoch eine gewünschte und gegebenenfalls komplexe und nicht durch Bohrvorgänge in einem Vollmaterial realisierbare ungleichachsige Stellung der Öffnungsachsen realisiert werden. Eine derartige Ausführungsform hat außerdem den Vorteil, dass das erste Stutzenelement mit unterschiedlichen zweiten Stutzenelementen kombinierbar ausgeführt sein kann um, den Anschlussstutzen variabel zu gestalten.

Im Sinne der vorliegenden Erfindung ist auch eine Kraftstoffhochdruckpumpe für ein Kraftstoffsystem einer Brennkraftmaschine, wobei die Kraftstoffhochdruckpumpe einen Anschlussstutzen umfasst, der einer oder mehreren der oben genannten Ausführungsformen entspricht und am Auslass der Kraftstoffhochdruckpumpe angebracht ist und mit dem Hochdruckbereich des Kraftstoffsystems verbindbar ist.

Weitere Merkmale, Anwendungsmöglichkeiten und Vorteile der Erfindung ergeben sich aus der nachfolgenden Beschreibung von Ausführungsbeispielen der Erfindung, die anhand der Zeichnungen erläutert werden, wobei die Merkmale sowohl in Alleinstellung als auch in unterschiedlichen Kombinationen für die Erfindung wichtig sein können, ohne dass hierauf nochmals explizit hingewiesen wird. Es zeigen:
Figur 1 eine schematische Darstellung eines Kraftstoffsystems einer Brennkraftmaschine mit einer als Kolbenpumpe ausgebildeten Kraftstoffhochdruckpumpe;
Figur 2 eine Schnittdarstellung einer Ausführungsform eines erfindungsgemäßen Anschlussstutzens; und
Figur 3 eine Schnittdarstellung einer weiteren Ausführungsform eines erfindungsgemäßen Anschlussstutzens.

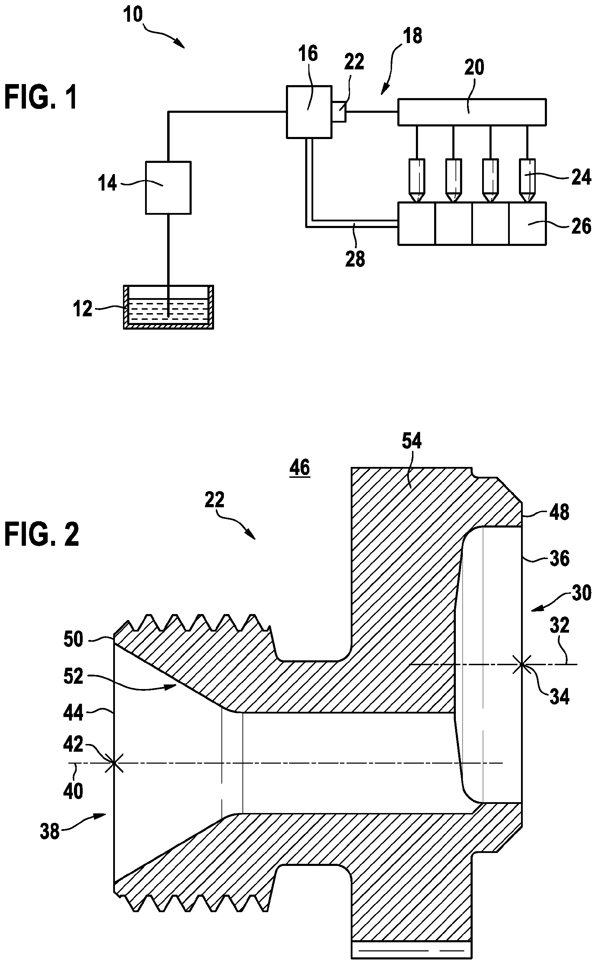

Ein Kraftstoffsystem trägt in Figur 1 insgesamt das Bezugszeichen 10. Es umfasst einen Kraftstoffbehälter 12, der Kraftstoff enthält und aus dem eine Vorförderpumpe 14 den Kraftstoff zu einer als Kolbenpumpe ausgebildeten Kraftstoffhochdruckpumpe 16 fördert. Die Kraftstoffhochdruckpumpe 16 verdichtet den Kraftstoff auf ein für eine Einspritzung ausreichend hohes Druckniveau und fördert ihn zu einem Hochdruckbereich 18, der ein Kraftstoffrail 20 umfasst. Am Übergang zwischen der Kraftstoffhochdruckpumpe 16 und dem Hochdruckbereich 18 ist ein Anschlussstutzen 22 angeordnet.

An das Kraftstoffrail 20 sind mehrere Injektoren 24 angeschlossen. Die Injektoren 24 spritzen den Kraftstoff direkt in ihnen zugeordnete Brennräume 26 ein. Die als Kolbenpumpe ausgeführte Kraftstoffhochdruckpumpe 16 wird von einer Brennkraftmaschine, welche die Brennräume 26 umfasst, mechanisch angetrieben, was durch die Verbindung 28 angedeutet ist.

In Figur 2 ist der Anschlussstutzen 22 in einer Schnittansicht im Detail dargestellt. Der Anschlussstutzen 22 weißt eine erste Anschlussöffnung 30 auf, die zur Verbindung mit dem Auslass der Kraftstoffhochdruckpumpe 16 vorgesehen ist. Die erste Anschlussöffnung 30 weist eine erste Öffnungsachse 32 auf. Die erste Öffnungsachse 32 der ersten Anschlussöffnung 30 entspricht dabei einer Geraden, die durch einen mit einem Kreuz gekennzeichneten ersten Flächenmittelpunkt 34 der ersten Öffnungsfläche 36 verläuft, wobei die erste Öffnungsachse 32 orthogonal zur ersten Öffnungsfläche 36 angeordnet ist.

Der Anschlussstutzen 22 weist auch eine zweite Anschlussöffnung 38 auf, die zur Verbindung mit dem Hochdruckbereich 18 vorgesehen ist. Die zweite Anschlussöffnung 38 weist eine zweite Öffnungsachse 40 auf. Die zweite Öffnungsachse 40 der zweiten Anschlussöffnung 38 entspricht dabei einer Geraden, die durch einen mit einem Kreuz gekennzeichneten zweiten Flächenmittelpunkt 42 der zweiten Öffnungsfläche 44 verläuft, wobei die zweite Öffnungsachse 40 orthogonal zur zweiten Öffnungsfläche 44 angeordnet ist. Mit den jeweiligen Öffnungsflächen 36 bzw. 44 der Anschlussöffnungen 30 bzw. 38 sind die lichten Flächen gemeint, mit denen die Anschlussöffnungen 30 bzw. 38 in die Außenseite des Anschlussstutzens 22 münden.

Die zweite Öffnungsachse 40 ist ungleichachsig mit der ersten Öffnungsachse 32 angeordnet. Die zweite Öffnungsachse 40 liegt mit der ersten Öffnungsachse 32 in einer Ebene 46, die der Schnittebene von Figur 2 entspricht. Die zweite Öffnungsachse 40 ist auch parallel zu der ersten Öffnungsachse 32 angeordnet.

Die erste Anschlussöffnung 30 liegt auf einer ersten Seite 48 des Anschlussstutzens 22. Der ersten Seite 48 des Anschlussstutzens 22 liegt eine zweite Seite 50 des Anschlussstutzens 22 gegenüber. Auf der zweiten Seite 50 des Anschlussstutzens 22 ist die zweite Anschlussöffnung 38 angeordnet.

Die zweite Anschlussöffnung 38 weist einen sich entlang der zweiten Öffnungsachse 40 aufweitenden Querschnitt 52 auf.

Bei der in Figur 2 gezeigten Ausführungsform des Anschlussstutzens 22 sind die erste Anschlussöffnung 30 und die zweite Anschlussöffnung 38 in einem einstückig ausgebildeten Grundkörper 54 des Anschlussstutzens 22 angeordnet. Der Grundkörper 54 des Anschlussstutzens 22 bildet vorliegend den Anschlussstutzen 22, damit ist gemeint, dass der Anschlussstutzen 22 keine weiteren an den Grundkörper 54 angefügten Bestandteile umfasst.

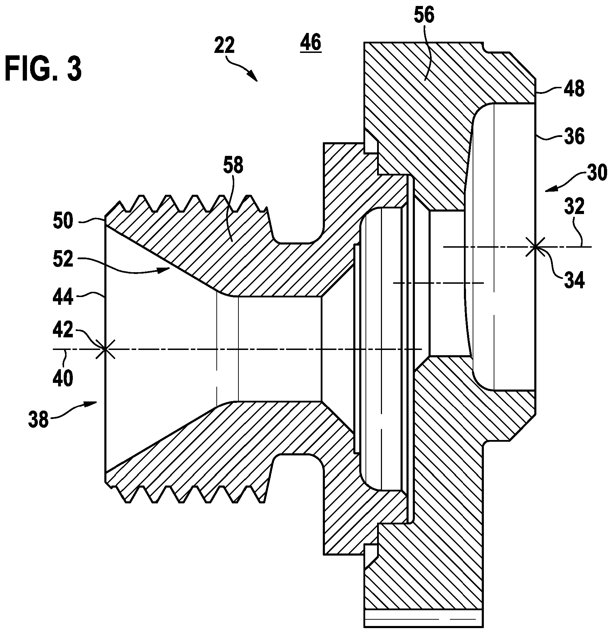

Eine alternative Ausführungsform des erfindungsgemäßen Anschlussstutzens 22 ist in Figur 3 dargestellt. Der Anschlussstutzen 22 aus Figur 3 ist ähnlich dem Anschlussstutzen 22 aus Figur 2 aufgebaut. Der Anschlussstutzen 22 aus Figur 3 unterscheidet sich jedoch von dem Anschlussstutzen 22 aus Figur 2 dadurch, dass er keinen einstückig ausgebildeten Grundkörper 54 umfasst. Statt dem einstückig ausgebildeten Grundkörper 54 umfasst der Anschlussstutzen 22 aus Figur 3 ein erstes Stutzenelement 56 und ein zweites Stutzenelement 58.

Das erste Stutzenelement 56 umfasst die erste Anschlussöffnung 30, während das zweite Stützelement 58 die zweite Anschlussöffnung 38 umfasst. Das erste Stutzenelement 56 ist getrennt von dem zweiten Stutzenelement 58 gefertigt. Vorliegend ist das zweite Stutzenelement 58 rotationssymmetrisch ausgebildet. Diese rotationssymmetrische Ausbildung ist jedoch nicht zwingend. Um den Anschlussstutzen 22 zu bilden sind die beiden Stutzenelemente 56, 58 miteinander verbunden. Vorliegend sind die beiden Stutzenelemente 56, 58 miteinander verschraubt. Die beiden Stutzenelemente 56,58 können jedoch auch auf eine andere fluidisch dichte Weise miteinander verbunden sein, beispielsweise können sie miteinander verschweißt sein.

## Patentansprüche

1. Kraftstoffsystem (10) einer Brennkraftmaschine, mit einem Kraftstoffbehälter 12, der Kraftstoff enthält und einer Vorförderpumpe 14, die den Kraftstoff aus dem Kraftstoffbehälter 12 zu einer als Kolbenpumpe ausgebildeten Kraftstoffhochdruckpumpe 16 fördert, welche den Kraftstoff auf ein für eine Einspritzung ausreichend hohes Druckniveau verdichtet und zu einem Hochdruckbereich 18, der ein Kraftstoffrail 20 umfasst, fördert, wobei an dem Kraftstoffrail 20 mehrere Injektoren 24 angeschlossen sind, durch die der Kraftstoff direkt in ihnen zugeordnete Brennräume 26 der Brennkraftmaschine einspritzbar ist, wobei die Kraftstoffhochdruckpumpe 16 von der Brennkraftmaschine mechanisch antreibbar ist, wobei an dem Übergang zwischen der Kraftstoffhochdruckpumpe 16 und dem Hochdruckbereich 18, am Auslass der Kraftstoffhochdruckpumpe (16), ein Anschlussstutzen 22 angeordnet ist, und mit dem Hochdruckbereich (18) des Kraftstoffsystems (10) verbunden ist, wobei der Anschlussstutzen (22) eine erste Anschlussöffnung (30), zur Verbindung mit dem Auslass der Kraftstoffhochdruckpumpe (16) mit einer ersten Öffnungsachse (32) aufweist, und eine zweite Anschlussöffnung (38), die zur Verbindung mit dem Hochdruckbereich (18) mit einer zweiten Öffnungsachse (40) aufweist, wobei die zweite Öffnungsachse (40) ungleichachsig mit der ersten Öffnungsachse (32) angeordnet ist, **dadurch gekennzeichnet, dass** die zweite Öffnungsachse (40) parallel zu der ersten Öffnungsachse (32) angeordnet ist.

2. Kraftstoffsystem (10) nach Anspruch 1, **dadurch gekennzeichnet, dass** die erste Öffnungsachse (32) und die zweite Öffnungsachse (40) in einer Ebene (46) liegen.

3. Kraftstoffsystem (10) nach einem oder mehreren der vorangegangenen Ansprüche, **dadurch gekennzeichnet, dass** die erste Anschlussöffnung (30) und die zweite Anschlussöffnung (38) jeweils auf gegenüberliegenden Seiten (48, 50) des Anschlussstutzens (22) liegen.

4. Kraftstoffsystem (10) nach einem oder mehreren der vorangegangenen Ansprüche, **dadurch gekennzeichnet, dass** die zweite Anschlussöffnung (38) einen sich entlang der zweiten Öffnungsachse (40) aufweitenden Querschnitt (52) aufweist.

5. Kraftstoffsystem (10) nach einem oder mehreren der vorangegangenen Ansprüche, **dadurch gekennzeichnet, dass** die erste Anschlussöffnung (30) mit einer ersten Öffnungsfläche (36) in die Außenseite des Anschlussstutzens (22) mündet und die zweite Anschlussöffnung (38) mit einer zweiten Öffnungsfläche (44) in die Außenseite des Anschlussstutzens (22) mündet, wobei die erste Öffnungsfläche (36) größer ist als die zweite Öffnungsfläche (44).

6. Kraftstoffsystem (10) nach einem oder mehreren der vorangegangenen Ansprüche, **dadurch gekennzeichnet, dass** die erste Anschlussöffnung (30) und die zweite Anschlussöffnung (38) in einem einstückig ausgebildeten Grundkörper (54) des Anschlussstutzens (22) angeordnet sind, vorzugsweise wobei der Anschlussstutzen (22) einstückig ausgebildet ist.

7. Kraftstoffsystem (10) nach einem oder mehreren der vorangegangenen Ansprüche 1 bis 6, **dadurch gekennzeichnet, dass** die erste Anschlussöffnung (30) in einem ersten Stutzenelement (56) angeordnet ist und die zweite Anschlussöffnung (38) in einem getrennt gefertigten zweiten Stutzenelement (58), vorzugsweise das rotationssymmetrisch ausgebildet ist, angeordnet ist, und das erste Stutzenelement (56) mit dem zweiten Stutzenelement (58), vorzugsweise über eine Schraubverbindung oder eine fluiddichte, insbesondere stoffschlüssige, Verbindung, insbesondere eine Schweißnaht, verbunden ist.

## Claims

1. Fuel system (10) of an internal combustion engine, having a fuel tank 12, which contains fuel, and a pre-feed pump 14, which feeds the fuel from the fuel tank 12 to a high-pressure fuel pump 16 which is in the form of a piston pump and which compresses the fuel to a pressure level of sufficient magnitude for an injection and feeds it to a high-pressure region 18, which comprises a fuel rail 20, wherein a plurality of injectors 24 are connected to the fuel rail 20, said injectors being able to inject the fuel directly into combustion chambers 26, which are associated therewith, of the internal combustion engine, wherein the high-pressure fuel pump 16 can be mechanically driven by the internal combustion engine, wherein a connection fitting 22 is arranged at the transition between the high-pressure fuel pump 16 and the high-pressure region 18, at the outlet of the high-pressure fuel pump (16), and is connected to the high-pressure region (18) of the fuel system (10), wherein the connection fitting (22) has a first connection opening (30), for connecting to the outlet of the high-pressure fuel pump (16) and having a first opening axis (32), and has a second connection opening (38), for connecting to the high-pressure region (18) and having a second opening axis (40), wherein the second opening axis (40) is arranged non-coaxially to the first opening axis (32), **characterized in that** the second opening axis (40) is arranged parallel to the first opening axis (32).

2. Fuel system (10) according to Claim 1, **characterized in that** the first opening axis (32) and the second opening axis (40) lie in a plane (46).

3. Fuel system (10) according to one or more of the preceding claims, **characterized in that** the first connection opening (30) and the second connection opening (38) each lie on opposite sides (48, 50) of the connection fitting (22).

4. Fuel system (10) according to one or more of the preceding claims, **characterized in that** the second connection opening (38) has a cross section (52) which widens along the second opening axis (40).

5. Fuel system (10) according to one or more of the preceding claims, **characterized in that** the first connection opening (30) leads into the exterior of the connection fitting (22) with a first opening area (36) and the second connection opening (38) leads into the exterior of the connection fitting (22) with a second opening area (44), wherein the first opening area (36) is larger than the second opening area (44).

6. Fuel system (10) according to one or more of the preceding claims, **characterized in that** the first connection opening (30) and the second connection opening (38) are arranged in a base body (54), formed in one piece, of the connection fitting (22), preferably wherein the connection fitting (22) is formed in one piece.

7. Fuel system (10) according to one or more of the preceding Claims 1 to 6, **characterized in that** the first connection opening (30) is arranged in a first fitting element (56) and the second connection opening (38) is arranged in a separately manufactured second fitting element (58), preferably which is formed to be rotationally symmetrical, and the first fitting element (56) is connected to the second fitting element (58), preferably via a screw connection or a fluid-tight, in particular material-fitting, connection, in particular a weld joint.

## Revendications

1. Système à carburant (10) d'un moteur à combustion interne, comprenant un réservoir de carburant 12, qui contient du carburant, et une pompe de pré-alimentation 14, qui refoule le carburant du réservoir de carburant 12 vers une pompe à carburant haute pression 16 réalisée sous forme de pompe à piston, qui comprime le carburant à un niveau de pression suffisamment élevé pour une injection et l'achemine vers une zone haute pression 18, qui comprend une rampe de carburant 20, plusieurs injecteurs 24 étant raccordés à la rampe de carburant 20, par lesquels le carburant est apte à être injecté directement dans des chambres de combustion 26 du moteur à combustion interne qui leur sont associées, la pompe à carburant haute pression de carburant 16 étant apte à être entraînée mécaniquement par le moteur à combustion interne, un raccord tubulaire 22 étant agencé à la transition entre la pompe à carburant haute pression 16 et la zone haute pression 18, à la sortie de la pompe à carburant haute pression (16), et étant relié à la zone haute pression (18) du système à carburant (10), le raccord tubulaire (22) présentant une première ouverture de raccordement (30) pour la liaison avec la sortie de la pompe à carburant haute pression (16) avec un premier axe d'ouverture (32), et une deuxième ouverture de raccordement (38) destinée à être raccordée à la zone haute pression (18) avec un deuxième axe d'ouverture (40), le deuxième axe d'ouverture (40) étant agencé de manière non coaxiale au premier axe d'ouverture (32), **caractérisé en ce que** le deuxième axe d'ouverture (40) est agencé parallèlement au premier axe d'ouverture (32).

2. Système à carburant (10) selon la revendication 1, **caractérisé en ce que** le premier axe d'ouverture (32) et le deuxième axe d'ouverture (40) sont situés dans un plan (46) .

3. Système à carburant (10) selon une ou plusieurs des revendications précédentes, **caractérisé en ce que** la première ouverture de raccordement (30) et la deuxième ouverture de raccordement (38) sont situées respectivement sur des côtés opposés (48, 50) du raccord tubulaire (22).

4. Système à carburant (10) selon une ou plusieurs des revendications précédentes, **caractérisé en ce que** la deuxième ouverture de raccordement (38) présente une section transversale (52) s'élargissant le long du deuxième axe d'ouverture (40).

5. Système à carburant (10) selon une ou plusieurs des revendications précédentes, **caractérisé en ce que** la première ouverture de raccordement (30) débouche par une première surface d'ouverture (36) à l'extérieur du raccord tubulaire (22) et la deuxième ouverture de raccordement (38) débouche par une deuxième surface d'ouverture (44) à l'extérieur du raccord tubulaire (22), la première surface d'ouverture (36) étant supérieure à la deuxième surface d'ouverture (44).

6. Système à carburant (10) selon une ou plusieurs des revendications précédentes, **caractérisé en ce que** la première ouverture de raccordement (30) et la deuxième ouverture de raccordement (38) sont disposées dans un corps de base (54) du raccord tubulaire (22) réalisée d'une seule pièce, de préférence dans lequel le raccord tubulaire (22) est réalisé d'une seule pièce.

7. Système à carburant (10) selon une ou plusieurs des revendications précédentes 1 à 6, **caractérisé en ce que** la première ouverture de raccordement (30) est agencée dans un premier élément (56) de raccord tubulaire et la deuxième ouverture de raccordement (38) est agencée dans un deuxième élément (58) de raccord tubulaire fabriqué séparément, de préférence qui est réalisé à symétrie de révolution, et le premier élément de tubulure (56) est relié au deuxième élément de tubulure (58), de préférence par un assemblage vissé ou un assemblage étanche aux fluides, en particulier par liaison de matière, en particulier un cordon de soudure.
